# EUROPÄISCHE PATENTSCHRIFT

(11) **EP 1 044 325 B1**
(45) Veröffentlichungstag und Bekanntmachung des Hinweises auf die Patenterteilung: **27.03.2002**
(21) Anmeldenummer: 98965874.5
(22) Anmeldetag: 22.12.1998
(51) Int. Cl.: F02M 35/10

(54) **SAUGANLAGE FÜR EINE VERBRENNUNGSLUFTVERSORGUNG EINER BRENNKRAFTMASCHINE**
METHOD FOR PRODUCING DOORS, HOODS OR SINGLE PARTS MADE OF SHEET METAL IN AUTOMOTIVE BODYSHELLS
INSTALLATION D'ASPIRATION POUR UNE ALIMENTATION EN AIR COMBURANT D'UN MOTEUR A COMBUSTION INTERNE

(30) Priorität: 02.01.1998 DE 19800061
(43) Veröffentlichungstag der Anmeldung: 18.10.2000
(73) Patentinhaber: Volkswagen Aktiengesellschaft, 38436 Wolfsburg (DE)
(72) Erfinder: ALBERT, Werner, D-38154 Königslutter (DE)
(86) Internationale Anmeldenummer: EP9808458
(87) Internationale Veröffentlichungsnummer: WO9935392

(56) Entgegenhaltungen:
- WO-A-93/23666
- WO-A-94/04816
- DE-A- 4 439 792
- DE-C- 737 250

## Beschreibung

Die Erfindung betrifft Sauganlage für eine Verbrennungsluftversorgung einer Brennkraftmaschine, insbesondere für ein Kraftfahrzeug, mit einem Ansaugtrichter, welcher an einem offenen Ende einen Ansaugstutzen aufweist, und einem Luftsammler, an welchem zylinderindividuelle Saugrohrarme angeordnet sind, welche mit einem Zylinderkopf der Brennkraftmaschine verbindbar sind, wobei der Ansaugtrichter und der Luftsammler in einem gemeinsamen Gehäuse ausgebildet sind und eine Trennwand des Gehäuses den Ansaugtrichter vom Luftsammler trennt, gemäß dem Oberbegriff des Anspruchs 1.

Bei derartigen Sauganlagen besteht mit zunehmender Bauraumoptimierung bzw. mit zunehmend in einem Motorraum geringerem zur Verfügung stehenden Bauraum das Problem, eine ausreichende und vor allem gleichmäßige Verbrennungsluftversorgung von einzelnen Zylindern der Brennkraftmaschine zur Verfügung zu stellen. Aus gasdynamischen Gründen war es bisher zu vermeiden bzw. mit großen Nachteilen versehen einen Ansaugluftstrom scharf umzulenken, weil es zu Druckverlusten und ungleichmäßiger Verteilung der Ansaugluft beispielsweise im Luftsammler kommt.

Die deutsche Offenlegungsschrift DE 44 39 792 A1 (D1) betrifft ein Lufteinlaßsystem für Verbrennungsmotoren, bei dem ein Lufteinlaßabschnitt, ein Sammlerabschnitt und ein Ansaugrohrabschnitt für mehrere Zylinder des Verbrennungsmotors nebeneinander angeordnet und direkt oder durch eine Trennwand miteinander verbunden sind. Nachteilig ist hierbei jedoch, daß bedingt durch eine Luftüberströmung an einem Ende des Sammlers die Ansaugluft nicht gleichmäßig auf die mit dem Sammler verbundenen Ansaugrohre verteilt wird, sondern solche Ansaugrohre bevorzugt mit Luft beliefert werden, da nahe an der Überströmstelle von Lufteinlaßabschnitt zu Sammlerabschnitt angeordnet sind.

Der vorliegenden Erfindung liegt daher die Aufgabe zugrunde, eine verbesserte Sauganlage der obengenannten Art zur Verfügung zu stellen, wobei die obengenannten Nachteile überwunden werden und ein bauraumoptimiertes Bauteil bei gleichzeitiger Vermeidung von Druckverlusten zur Verfügung gestellt wird.

Diese Aufgabe wird erfindungsgemäß durch eine Sauganlage der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß in der Trennwand ein den Ansaugtrichter mit dem Luftsammler verbindender Schlitz ausgebildet ist, welcher sich im wesentlichen parallel bezüglich des Ansaugtrichters und/oder des Luftsammlers erstreckt, daß die Trennwand an einer sich im wesentlichen parallel, insbesondere achsparallel, bezüglich des Ansaugtrichters und/oder des Luftsammlers erstreckenden Seite den Schlitz ausbildend in einem vorbestimmten Abstand von einer Gehäusewandung mit einem freien Ende endet, welches im Querschnitt wulstförmig ausgebildet ist und entgegen der Strömungsrichtung in den Ansaugtrichter ragend angeordnet ist, und daß der Ansaugtrichter ausgehend vom Ansaugstutzen weg sich verengenden Querschnittsverlauf aufweist, wobei der sich verengende Querschnittsverlauf derart ausgebildet ist, daß sich in Verbindung mit dem wulstförmigen freien Ende ein gleichmäßiger Eintritt von Ansaugluft in den Schlitz ergibt.

Dies hat den Vorteil, daß durch die enge Anordnung von Ansaugtrichter und Luftsammler eine kompakte, integrale und weniger Bauraum benötigende Anordnung geschaffen ist, wobei trotz einer scharfen Umlenkung des Ansaugluftstromes zur Bauraumoptimierung über eine gesamte Längsausdehnung von Ansaugtrichter bzw. Luftsammler ein gleichmäßiger Luftübergang ohne Druckverluste und mit guter Luft-/EGR-Gleichverteilung sichergestellt ist. Hierbei bezeichnet "EGR" eine Abgasrückführung in den Ansaugluftstrom. Dieser Effekt wird noch dadurch weiter unterstützt, daß der Ansaugtrichter einen vom Ansaugstutzen weg sich verengenden Querschnittsverlauf aufweist. Durch den sich verengenden Querschnitt erhöht sich gemäß den Gesetzen der Strömungslehre bzw. wegen eines konstanten Strömungsdruckes mit zunehmender Entfernung vom Ansaugstutzen eine Strömungsgeschwindigkeit des Ansaugluftstromes. Dadurch wird eine zusätzliche Vergleichmäßigung des Luftübertrittes vom Ansaugtrichter zum Luftsammler über die gesamte Länge des Schlitzes erzielt.

Zum Ausnutzen von insbesondere mehr langen als breiten Bauräumen sind der Ansaugtrichter und der Luftsammler in dem gemeinsamen Gehäuse derart ausgebildet, daß sie sich im wesentlichen parallel, insbesondere achsparallel, zueinander erstrecken. Dadurch ergibt sich ein entsprechend längliches Bauteil.

In einer besonders bevorzugten Ausführungsform der Erfindung erstreckt sich der Schlitz achsparallel bezüglich des Ansaugtrichters und/oder des Luftsammlers.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäßen Sauganlage in perspektivischer Ansicht,
- Fig. 2: in Aufsicht,
- Fig. 3: in Seitenansicht,
- Fig. 4: in einer Schnittansicht entlang Linie G-G von Fig. 2,
- Fig. 5: in einer Schnittansicht entlang Linie A-A von Fig. 3,
- Fig. 6: in einer Schnittansicht entlang Linie B-B von Fig. 3,
- Fig. 7: in einer Schnittansicht entlang Linie C-C von Fig. 3,
- Fig. 8: in einer Schnittansicht entlang Linie D-D von Fig. 3,
- Fig. 9: in einer Schnittansicht entlang Linie E-E von Fig. 3,

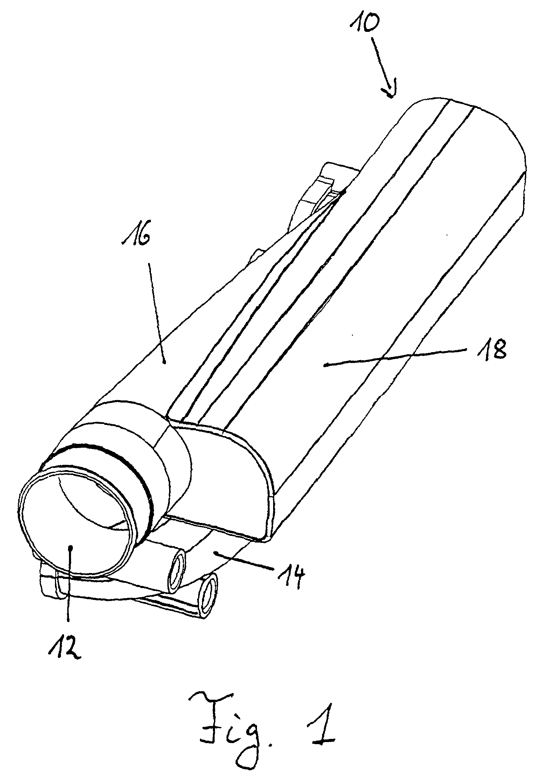

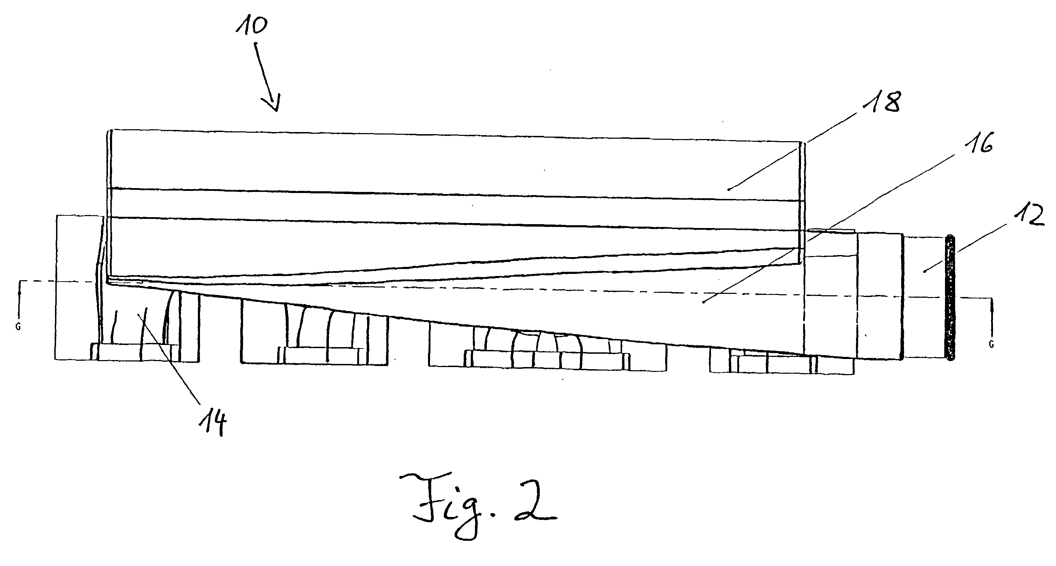

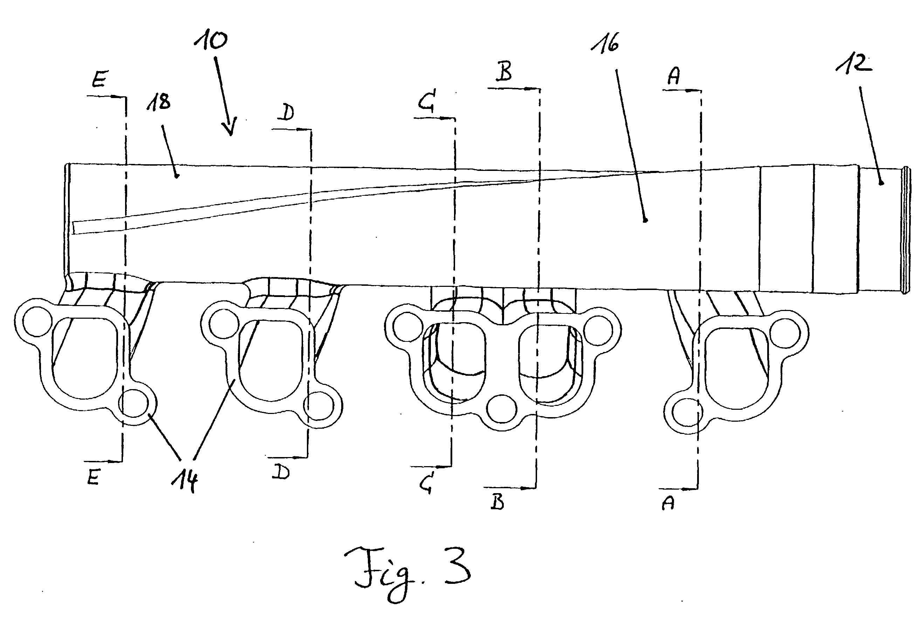

Die in Fig. 1 bis 3 dargestellte bevorzugte Ausführungsform einer erfindungsgemäßen Sauganlage umfaßt ein Gehäuse 10 mit einem Ansaugstutzen 12 und Saugrohrarmen 14. Es ist für jeden Zylinder einer nicht dargestellten Brennkraftmaschine ein Saugrohrarm 14 vorgesehen. Ein Teil des Gehäuses 10 bildet einen Ansaugtrichter 16 und ein weiteres Teil des Gehäuses 10 bildet den Luftsammler 18 aus.

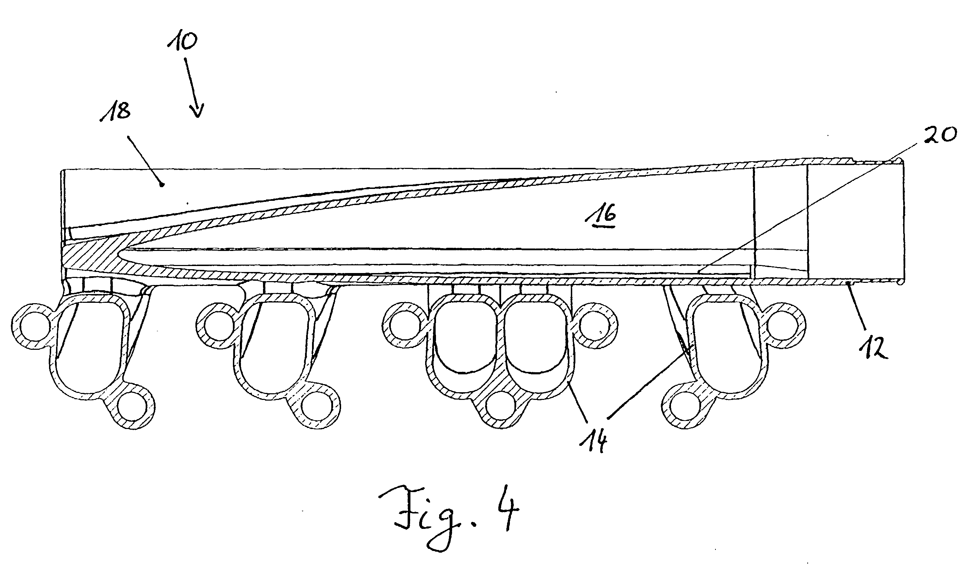

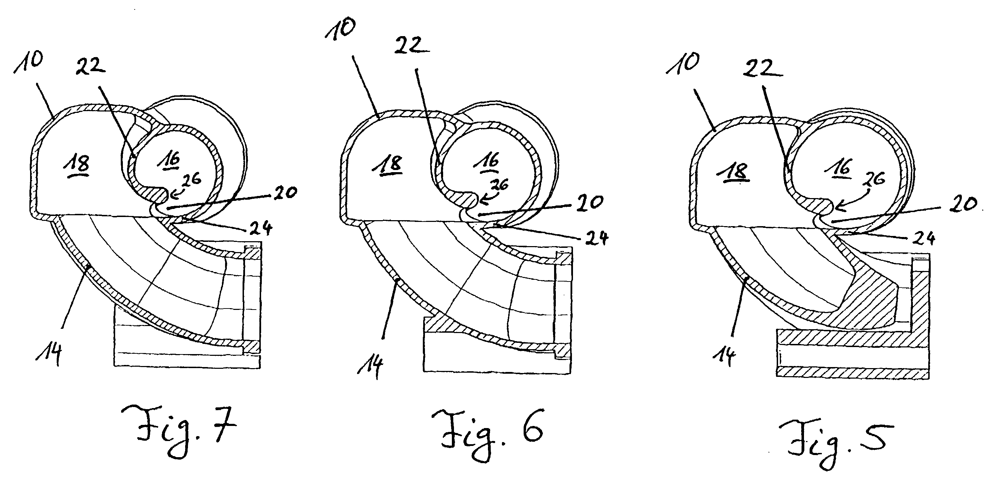

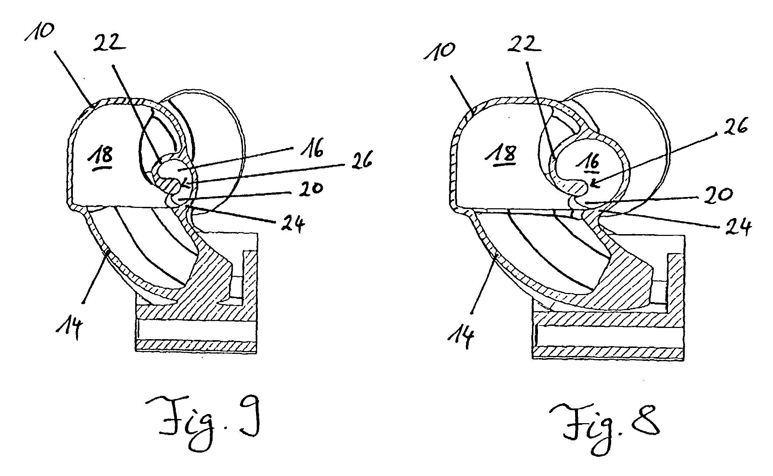

Wie sich aus Fig. 4 bis 9 ergibt, verengt sich der Ansaugtrichter 16 mit zunehmender Entfernung vom Ansaugstutzen 12. Femer sind Ansaugtrichter 16 und Luftsammler 18 im wesentlichen achsparallel bzw. unter einem kleinen Achswinkel zueinander in dem gemeinsamen Gehäuse 10 ausgebildet. Ansaugtrichter 16 und Luftsammler 18 sind über einen Längsschlitz 20 in einer die beiden voneinander trennenden Trennwand 22 des Gehäuses 10 verbunden. Vom Luftsammler 18 zweigt für jeden Zylinder der Brennkraftmaschine ein separater Saugrohrarm 14 ab.

Der Längsschlitz 20 wird von der Trennwand 22 derart ausgebildet, daß eine Längsseite der Trennwand 22 in einem vorbestimmten Abstand von einer Gehäusewandung 24 in Form eines freien Endes 26 endet. Dieses freie Ende 26 ist wulstartig ausgebildet und ragt entgegen der Strömungsrichtung in den Ansaugtrichter 18.

Die Ansaugluft strömt über den Ansaugstutzen 12 in den Ansaugtrichter 16. Der Querschnittsverlauf des Ansaugtrichters 16 ist derart ausgelegt, daß die Ansaugluft gleichmäßig in den Längsschlitz 20 zwischen Ansaugtrichter 16 und Luftsammler 18 eintritt. Die somit identischen Ansaugbedingungen für jeden einzelnen Zylinder der Brennkraftmaschine führen zu einer konstanten Luftverteilung auf die Saugrohrarme 14 und damit auf die Zylinder der Brennkraftmaschine. Die Querschnittsfläche des Längsschlitzes 22 ist dabei derart ausgebildet, daß zusammen mit der wulstartigen Konturierung des Längsschlitzes 22 ein Druckverlust beim Überströmvorgang vom Ansaugtrichter 16 in den Luftsammler 18 minimiert ist. Vom Luftsammler strömt die Ansaugluft entsprechend einer Zündfolge der Zylinder der Brennkraftmaschine in die Saugrohrarme 14 der einzelnen Zylinder.

## Patentansprüche

1. Sauganlage für eine Verbrennungsluftversorgung einer Brennkraftmaschine, insbesondere für ein Kraftfahrzeug, mit einem Ansaugtrichter (16), welcher an einem offenen Ende einen Ansaugstutzen (12) aufweist, und einem Luftsammler (18), an welchem zylinderindividuelle Saugrohrarme (14) angeordnet sind, welche mit einem Zylinderkopf der Brennkraftmaschine verbindbar sind, wobei der Ansaugtrichter (16) und der Luftsammler (18) in einem gemeinsamen Gehäuse (10) ausgebildet sind und eine Trennwand (22) des Gehäuses (10) den Ansaugtrichter (16) vom Luftsammler (18) trennt,
**dadurch gekennzeichnet,**
**daß** in der Trennwand (22) ein den Ansaugtrichter (16) mit dem Luftsammler (18) verbindender Schlitz (20) ausgebildet ist, welcher sich im wesentlichen parallel bezüglich des Ansaugtrichters (16) und/oder des Luftsammlers (18) erstreckt,
**daß** die Trennwand (22) an einer sich im wesentlichen parallel, insbesondere achsparaliel, bezüglich des Ansaugtrichters (16) und/oder des Luftsammlers (18) erstreckenden Seite den Schlitz (20) ausbildend in einem vorbestimmten Abstand von einer Gehäusewandung (24) mit einem freien Ende (26) endet, welches im Querschnitt wulstförmig ausgebildet ist und entgegen der Strömungsrichtung in den Ansaugtrichter ragend angeordnet ist, und
**daß** der Ansaugtrichter (16) ausgehend vom Ansaugstutzen (12) weg sich verengenden Querschnittsveriauf aufweist,
wobei der sich verengende Querschnittsverlauf derart ausgebildet ist, daß sich in Verbindung mit dem wulstförmigen freien Ende (26) ein gleichmäßiger Eintritt von Ansaugluft in den Schlitz (20) ergibt.

2. Sauganlage nach Anspruch 1,
**dadurch gekennzeichnet, daß**
der Ansaugtrichter (16) und der Luftsammler (18) in dem gemeinsamen Gehäuse (10) derart ausgebildet sind, daß sie sich im wesentlichen parallel, insbesondere achsparallel, zueinander erstrecken.

3. Sauganlage nach Anspruch 1 oder 2,
**dadurch gekennzeichnet, daß**
sich der Schlitz (20) achsparallel bezüglich des Ansaugtrichters (16) und/oder des Luftsammlers (18) erstreckt.

## Claims

1. Suction system for a combustion air supply to an internal combustion engine, in particular for a motor vehicle, having an induction trumpet (16) which at an open end has an induction pipe (12), and an air manifold (18), on which cylinder-specific suction pipe arms (14), which can be connected to a cylinder head of the internal combustion engine, are arranged, the induction trumpet (16) and the air manifold (18) being formed in a common housing (10) and a partition (22) of the housing (10) separating the induction trumpet (16) from the air manifold (18),
**characterized in that** a slot (20) which connects the induction trumpet (16) to the air manifold (18) is formed in the partition (22), which slot (20) extends substantially parallel with respect to the induction trumpet (16) and/or the air manifold (18),
**in that** the partition (22), on a side which extends substantially parallel, in particular axially parallel, with respect to the induction trumpet (16) and/or the air manifold (18) ends, at a predetermined distance from a housing wall (24), with a free end (26) which forms the slot (20), the free end, as seen in cross section, being designed in the form of a bead and being arranged so as to project into the induction trumpet counter to the direction of flow, and
**in that** the induction trumpet (16) has a cross-sectional profile which narrows in the direction away from the induction connection piece (12),
the narrowing cross-sectional profile being designed in such a manner that, in combination with the bead-like free end (26), the result is a uniform entry of induction air into the slot (20).

2. Suction system according to Claim 1, **characterized in that** the induction trumpet (16) and the air manifold (18), in the common housing (10), are designed in such a manner that they extend substantially parallel, in particular axially parallel, to one another.

3. Suction system according to Claim 1 or 2, **characterized in that** the slot (20) extends axially parallel with respect to the induction trumpet (16) and/or the air manifold (18).

## Revendications

1. Installation d'aspiration pour une alimentation en air de combustion d'un moteur à combustion interne, en particulier pour un véhicule automobile, avec une pipe d'aspiration (16), qui présente à une extrémité ouverte un orifice d'aspiration (12), et un collecteur d'air (18), sur lequel sont disposés des tuyaux d'aspiration individuels (14) des cylindres, qui peuvent être raccordés à une tête de cylindre du moteur à combustion interne, dans laquelle la pipe d'aspiration (16) et le collecteur d'air (18) sont configurés en une enceinte commune et une cloison (22) de l'enceinte (10) sépare la pipe d'admission (16) du collecteur d'air (18), **caractérisée en ce qu'**une fente (20) reliant la pipe d'aspiration (16) au collecteur d'air (18) est formée dans la cloison (22), fente qui s'étend sensiblement parallèlement par rapport à la pipe d'aspiration (16) et/ou au collecteur d'air (18), **en ce que** la cloison (22) se termine par une extrémité libre (26) à une distance prédéterminée d'une paroi (24) de l'enceinte en formant la fente (20) sur un côté s'étendant sensiblement parallèlement, en particulier parallèlement à l'axe, par rapport à la pipe d'aspiration (16) et/ou au collecteur d'air (18), extrémité qui a en section transversale la forme d'un bourrelet et est disposée en saillie à contre-courant de l'écoulement dans la pipe d'aspiration, et **en ce que** la pipe d'aspiration (16) présente une section transversale qui se rétrécit à partir de l'orifice d'aspiration (12), la section transversale qui se rétrécit étant configurée de telle manière qu'il se forme une entrée uniforme d'air d'aspiration dans la fente (20) en relation avec l'extrémité libre (26) en forme de bourrelet.

2. Installation d'aspiration suivant la revendication 1, **caractérisée en ce que** la pipe d'aspiration (16) et le collecteur d'air (18) sont configurés dans l'enceinte commune (10), de telle manière qu'ils s'étendent sensiblement parallèlement, en particulier parallèlement à l'axe, l'un à l'autre.

3. Installation d'aspiration suivant la revendication 1 ou 2, **caractérisée en ce que** la fente (20) s'étend parallèlement à l'axe par rapport à la pipe d'aspiration (16) et/ou au collecteur d'air (18).
